# EUROPEAN PATENT APPLICATION

(11) **EP 4 012 327 A1**
(43) Date of publication of application: **15.06.2022**
(21) Application number: 20212662.9
(22) Date of filing: 09.12.2020
(51) Int. Cl.: G01B 7/14, G01D 11/30

(54) **AIRGAP MEASUREMENT IN A GENERATOR OF A WIND TURBINE**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

A method for performing a plurality of measurements in the air gap (15) between a stator (20) and a rotor (30) of a generator (11) for a wind turbine (1), the rotor (30) being rotatable with respect to the stator (20) about a rotational axis (Y), includes the steps of:
mounting a plurality of distance measuring sensors (110) on at least one surface of the stator (20) and/or the rotor (30), said surface facing the air gap (15), each distance measuring sensor (110) being distanced from the other distance measuring sensor(s) (110) along rotational axis (Y),
rotating the rotor (30) about the rotational axis (Y), while rotating the rotor (30), measuring a plurality of distances between each of said distance measuring sensors (110) and respective facing points across the air gap (15),
deriving from said plurality of distances one or more value(s) of one or more parameter(s) associated with the air gap (15) and/or the stator (20) and/or rotor (30).

## Description

### Field of the invention

The invention relates to a method and a device for measuring the airgap between the stator and the rotor of an electric generator. Particularly, but not exclusively, can be applied to an electric generator for a wind turbine.

### Art background

The airgap, which is formed between the stator and a rotor in a wind turbine electric generator is an important design feature that contributes to determines the overall efficiency of the wind turbine. The tighter the airgap is and the less it fluctuates over the lateral surfaces the axial ends of the stator and the rotor, the more energy can be generated and the higher the efficiency is. During the assembly process of the electric generator, it is known to measure the airgap after the pairing between stator and rotor. The airgap has normally a thickness in the range of some millimetres and is therefore not well accessible. Nevertheless, the production must record the values as part of the quality check. Furthermore, the airgap measurement is possibly provided to the customer as a critical quality reference in the future.

This measurement may be performed manually by technicians, who have to crawl into the inside of the stator and use calliper gauges that are applied through radial airducts in the stator segments to measure the airgap. Multiple measurements are performed along the circumference of the generator. This procedure implies a plurality of inconveniences, for example:
- low accuracy of the measurements because the manual application is error prone. The repeatability accounts for a large error in the total measurement,
- low number of measurement points lead to an imprecise measurement of the airgap in height as well as circumference direction,
- long times required for performing the measurement operations.

### Summary of the invention

It may be therefore an object of the present invention to provide a method and a device for measuring the airgap between the stator and the rotor of an electric generator, which overcomes the above-mentioned inconveniences of the prior art.

This object may be solved by a method and a device according to the subject matter of the independent claims. Advantageous embodiments of the present invention are described by the dependent claims.

One aspect of the invention relates to a method for performing a plurality of measurements in the air gap between a stator and a rotor of a generator for a wind turbine, the rotor being rotatable with respect to the stator about a rotational axis, the method including the steps of:
mounting a plurality of distance measuring sensors on at least one surface of the stator and/or the rotor, said surface facing the air gap, each distance measuring sensor being distanced from the other distance measuring sensor(s) along rotational axis,
rotating the rotor about the rotational axis,
while rotating the rotor, measuring a plurality of distances between each of said distance measuring sensors (110) and respective facing points across the air gap,
deriving from said plurality of distances one or more value(s) of one or more parameter(s) associated with the air gap and/or the stator and/or rotor.

According to possible embodiments of the invention, said one or more parameter(s) associated with the air gap may be any of:
a thickness of the air gap, and/or
a rotor roundness, and/or
a stator roundness, and/or
a rotor concentricity, and/or
a stator concentricity, and/or
distance of the rotor center from a reference position, and/or
distance of the stator center from a reference position.

The present invention permits to achieve the following advantages:
- accuracy of the measurement by reducing the risk of manual application errors and a high degree of repeatability,
- great number of measurement points so that an envelope of the entire airgap can be compiled,
- attaching, measuring and detaching the system requires low manual effort and is faster than current measurements

It is further possible that the nominal airgap may be reduced in turbine generations due to higher confidence of the airgap, due to the above described measurement procedure. The production can fulfill quality assurance step faster, with higher data accuracy in less manual work (faster process). It also supports to understand assembly factors better how they impact the airgap and thus optimize the assembly to achieve an optimal airgap.

According to a possible embodiment of the invention, said steps of mounting rotating and measuring are first performed with the plurality of distance measuring sensors mounted on one of the stator and rotor and then said steps of mounting rotating and measuring are again performed with the plurality of distance measuring sensors (110) mounted on the other of rotor and stator.

According to another possible embodiment of the invention, in said step of mounting a first plurality of distance measuring sensors are mounted on a first surface of the stator and a second plurality of distance measuring sensors are mounted on a second surface of the rotor, said first and second surfaces facing the air gap.

According to possible embodiments of the invention, at least a portion of plurality of distance measuring sensors are fixed to a longitudinal support, said longitudinal support being fixed on a surface of the stator and/or the rotor, said surface facing the air gap, during said step of mounting.

Another aspect of the invention relates to a measurement device for performing a plurality of measurements in the air gap between a stator and a rotor of a generator for a wind turbine, the measurement device including:
a plurality of distance measuring sensors mounted on a longitudinal support,
a controller connected to the plurality of distance measuring sensors and configured for performing the steps of the measurement method above described.

According to possible embodiments of the invention, the longitudinal support may be in form of a stick along which the plurality of sensors is attached. The sensors may be regularly distributed along the length of the longitudinal support. The longitudinal support may be oriented during the measurement operations along the rotational axis of the electric generator or inclined with respect thereto of an inclination angle comprised between 0 and 10 degree. Such inclination angle may depend on the geometric constraints of the stator and/or rotor. The longitudinal support with the plurality of sensors may be fixed during the measurement operations to a surface of the stator or to a surface of the rotor, such surfaces of the stator and the rotor facing the airgap. In electric generators where the rotor is radial external to the stator, the longitudinal support with the plurality of sensors may be fixed during the measurement operations to an external surface of the stator or to an internal surface of the rotor. In electric generators where the rotor is radial internal to the stator, the longitudinal support with the plurality of sensors may be fixed during the measurement operations to an external surface of the rotor or to an internal surface of the stator. In permanent magnet electric generators, the longitudinal support with the plurality of sensors may be fixed to one or more magnets facing the airgap.

According to possible embodiments of the invention, the measurement device may include two longitudinal supports to be respectively fixed during the measurement operations to a surface of the stator and to a surface of the rotor, such surfaces of the stator and the rotor facing the airgap.

According to possible embodiments of the invention, the longitudinal support with the plurality of sensors may be fixed at positions, which are radially distanced from the airgap.

According to possible embodiments of the invention, the plurality of distance measuring sensors are capacitive sensors. The sensors may be capacitive film sensors or capacitive flat sensors. The sensors may be capacitive tactile sensor or eddy current sensors.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic section of a wind turbine including an electric generator.
- Figure 2: shows an exploded view of the stator and rotor of the electric generator of figure 1.
- Figure 3: shows a block diagram illustrating a first embodiment of a measurement method according to the present invention for performing a plurality of measurements in the air gap of the electric generator of figures 1 and 2.
- Figure 4: shows a block diagram illustrating a second embodiment of a measurement method according to the present invention for performing a plurality of measurements in the air gap of the electric generator of figures 1 and 2.
- Figure 5: shows a partial view of an assembly of the stator of the electric generator of figures 1 and 2 and a measurement device according to the present invention.
- Figure 6: shows a partial view of an assembly of the electric generator of figures 1 and 2 and a measurement device according to the present invention.
- Figure 7: shows a step of the measurement method of the present invention illustrating the fixing of the measurement device to the rotor of the electric generator.
- Figure 8: shows a more detailed view of the step of the measurement method of figure 7.

### Detailed Description

The illustrations in the drawings are schematic. It is noted that in different figures, similar or identical elements are provided with the same reference signs.

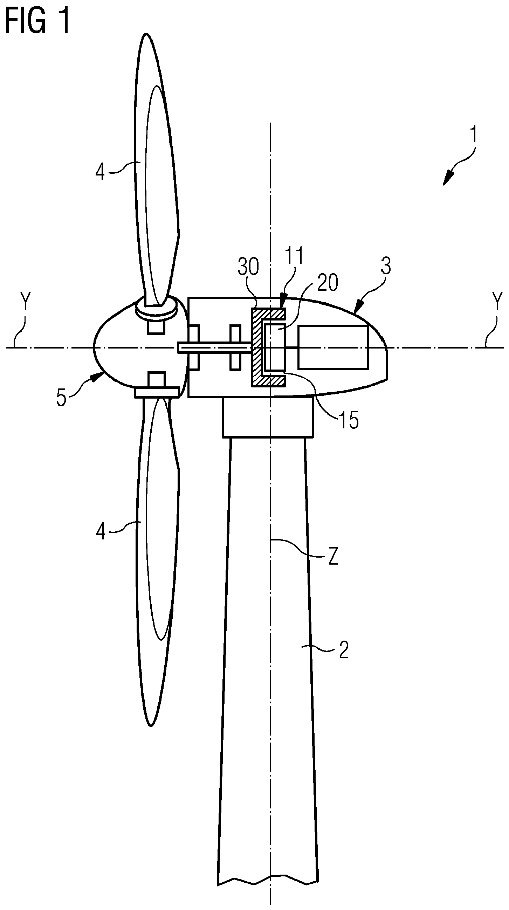

**Figure 1** shows a wind turbine 1 according to the invention. The wind turbine 1 comprises a tower 2, which is mounted on a non-depicted foundation. A nacelle 3 is arranged on top of the tower 2. The wind turbine 1 further comprises at least a wind rotor 5 having a hub and at least one blade 4 (in the embodiment of Figure 1, the wind rotor comprises three blades 4, of which only two blades 4 are visible). The wind rotor 5 is rotatable around a rotational longitudinal axis Y. The blades 4 extend substantially radially with respect to the longitudinal rotational axis Y. In general, when not differently specified, the terms axial, radial and circumferential in the following are made with reference to the longitudinal rotational axis Y. The wind turbine 1 comprises at least one electric generator 11, including a stator 20 and a rotor 30. The rotor 30 is rotatable with respect to the stator 20 about the longitudinal rotational axis Y. The wind rotor 5 is coupled with the rotor 30, in order to rotate about the rotational longitudinal axis Y. The electric generator 11 comprise an airgap 15 radially interposed between the stator 20 and the rotor 30, the airgap 15 extending circumferentially about the rotational axis Y. In the embodiment of the attached figures the rotor 30 is radially external to the stator 20. According to other embodiments (not show), the rotor may be radially internal to the stator.

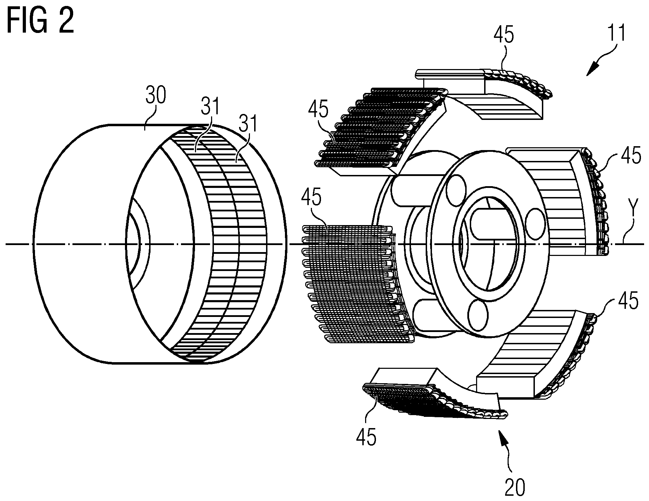

**Figure 2** shows an exploded view of the electrical generator 11 with the rotor 30 and the stator 20. The stator 20 comprises a cylindrical inner core to which six segments 45 are attached. Each segment 45 has a circumferential angular extension of 60°. According to other embodiments of the present invention, the stator 20 comprises a plurality of segments having a number of segments different from six. According to another possible embodiment of the present invention, the stator 20 is not segmented, i.e. the stator includes one single segment covering the entire angular extension of 360°. The rotor 30 has a conventional structure with a plurality of circumferentially distributed rotor permanent magnets 31. The magnets 31 are distributed on an inner side of the rotor 30 according to axial columns. Each column of magnets comprises a plurality of magnets 31 (two magnets 31 in the embodiment of figure 2) aligned along the rotational axis Y.

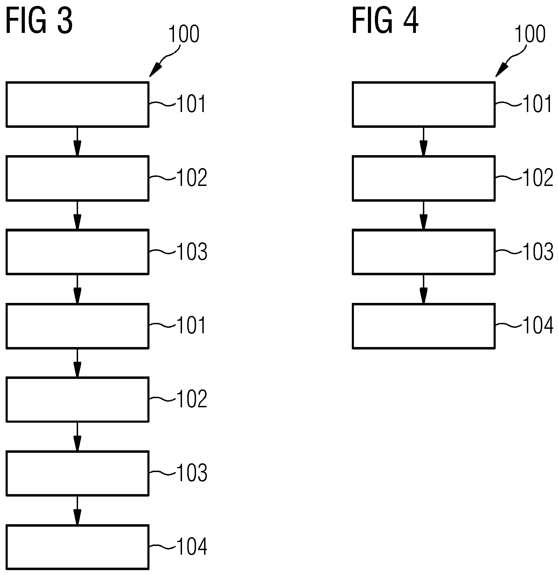

**Figures 3** and **4** show two respective block diagram of a method 100 for performing a plurality of measurements in the air gap 15. Such method may be performed during the manufacturing of the electric generator, for example as quality check.

A method 100 for performing a plurality of measurements in the air gap 15 includes the following steps:
a first step 101 of mounting a plurality of distance measuring sensors 210 on at least one respective surface of the stator 20 and/or the rotor 30. The surface(s) face the air gap 15, each distance measuring sensor 210 being distanced from the other distance measuring sensor(s) 210 along the rotational axis Y,
a second step 102 of rotating the rotor 30 about the rotational axis Y,
a third step 103 of, while rotating the rotor 30, measuring a plurality of distances between each of said distance measuring sensors 210 and respective facing points across the air gap 15,
a fourth step 104 of data analysis for deriving from the plurality of measured distances one or more value(s) of one or more parameter(s) associated with the air gap 15 and/or the stator 20 and/or rotor 30.

Such parameter(s) associated with the air gap 15 may be one or more of:
a thickness of the air gap,
a rotor roundness,
a stator roundness,
a rotor concentricity,
a stator concentricity,
distance of the rotor center from a reference position,
distance of the stator center from a reference position.

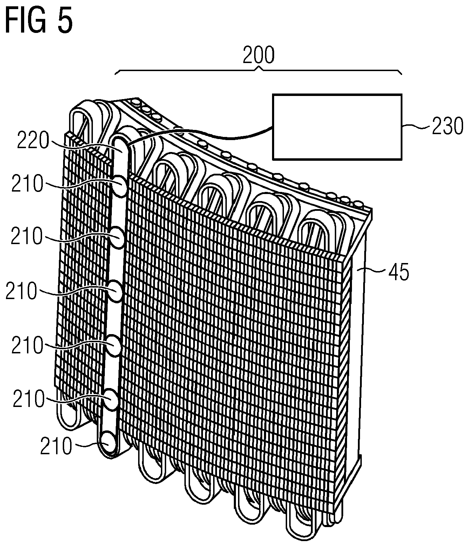

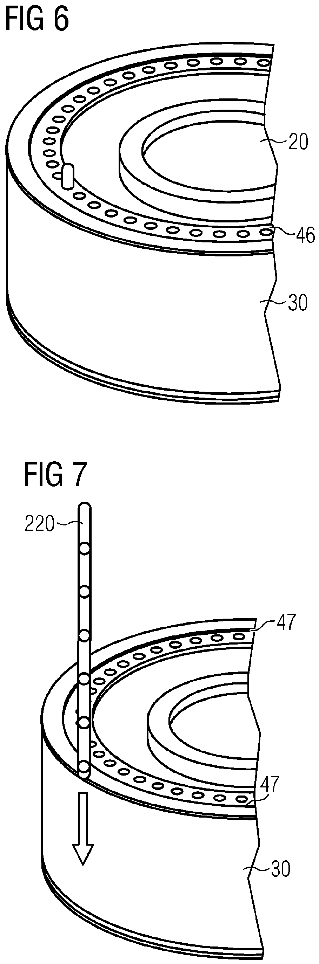

**Figure** 3 shows a first embodiment of a block diagram of a method 100. In a first execution of the first step 101, the method 100 comprises mounting a plurality of distance measuring sensors 210 on a surface of the stator 20 facing the air gap 15 (figure 5 and 6). For example, the sensors 210 may be attached to an external surface of a stator segment 45. The plurality of distance measuring sensors 110 may be alternatively mounted on a surface of the rotor 30 facing the air gap 15. The sensors 210 are fixed to the stator 20 or rotor 30 in such a way that each distance measuring sensor 210 is distanced from the other distance measuring sensors 210 along the rotational axis Y. After the first step 101 the rotor 30 and the stator 20 are paired and a break disc 46 (shown in figure 6 and 7) is attached to the generator 11. In a first execution of the second step 102 the method 100 comprises rotating the rotor 30 about the rotational axis Y. A complete rotation of 360 degrees or more may be executed. The rotation of the rotor 30 is initiated and stopped by an external device. In a first execution of the third step 103 of the method 100 comprises, while rotating the rotor 30, measuring a first plurality of distances between each of the distance measuring sensors 210, which has been mounted during the first step 101 of the method, and respective facing points across the air gap 15. After the third step 103 the sensors 210, which have been mounted during the first execution of the first step 101, are removed. The first step 101 of the method 100 is then repeated mounting the same or another plurality of distance measuring sensors 210 on a surface of the rotor 30 facing the air gap 15 (figure 7). For example, the sensors 210 may be attached to the magnets 31. The plurality of distance measuring sensors 110 may be alternatively mounted on a surface of the stator 20 facing the air gap 15, if in the previous execution of the first step 101 distance measuring sensors 210 were mounted on the rotor 30. A second execution of the second step 102 and third step 103 is also performed for measuring a second plurality of distances by means of the distance measuring sensors 210. After the third step 103 the sensors 210, which have been mounted during the second execution of the first step 101, are removed and the final fourth step 104 is performed.

**Figure 4** shows a second embodiment of a block diagram of a method 100. In the first step 101, the method 100 comprises mounting a first plurality of distance measuring sensors 210 on a surface of the stator 20 facing the air gap 15 (figure 5). For example, the sensors 210 may be attached to an external surface of a stator segment 45. The rotor 30 and the stator 20 are then paired. In the first step 101, the method 100 further comprises mounting a second plurality of distance measuring sensors 110 on a surface of the rotor 30 facing the air gap 15. For example, the sensors 210 may be attached to the magnets 31. The sensors 210 are fixed to the stator 20 and rotor 30 in such a way that each distance measuring sensor 210 is distanced from the other distance measuring sensors 210 along the rotational axis Y. After that the break disc 46 is attached to the generator 11. The second step 102 of the method 100 is executed by rotating the rotor 30 about the rotational axis Y. A complete rotation of 360 degrees or more may be executed. The rotation of the rotor 30 is initiated and stopped by an external device. The third step 103 of the method 100 is then executed, while rotating the rotor 30, for measuring a plurality of distances between each of the distance measuring sensors 210, which has been mounted during the first step 101 of the method, and respective facing points across the air gap 15. The plurality of distances measured during the third step 103 includes the measurement performed with the first plurality of sensors 210 and the second plurality of sensors 210 installed during the first step 101. After the third step 103 the sensors 210 are removed and the final fourth step 104 is performed.

**Figure 5** shows the coupling between a plurality of sensors 210 and a segment 45 of the stator 20, performed during the first step 101 of the method 100. The distance measuring sensors 210 are comprised in a measurement device 200, which also includes a longitudinal support 220, for example a stick, on which the sensors 210 are fixed and a controller 230 connected to the plurality of distance measuring sensors 210, for example by means of a cable 240, and configured for performing the steps of the method 100. The measurement device 200 of figure 5 includes six distance measuring sensors 210. According to other embodiments (not shown), the measurement device 200 of figure 5 may include two or more distance measuring sensors 210. The measuring sensors 210 may be capacitive sensors. For example, the measuring sensors 210 may be capacitive film sensors or capacitive flat sensors. According to other embodiments (not shown), the longitudinal support 220 may include one or more cable ties, screws, rubber bands, a knee-lever system or similar. The longitudinal support 220 may be tightened on the outer surface of the segment 45 with any tightening means.

**Figure 6** shows the pairing between the stator 20 and the rotor 30 and the mounting of the break disc 46, performed after the first execution of the step 101 in the first embodiment (figure 3) of the method 100.

**Figure 7** shows the coupling between a plurality of sensors 210 and the rotor 30, performed during the second execution of the first step 101 in the first embodiment (figure 3) of the method 100. The distance measuring sensors 210 are comprised in the same measurement device 200 used during the first execution of the step 101 (fig. 5) or in another measurement device 200. In other to facilitate the coupling between the measuring sensors 210 and the magnets 31, the longitudinal support 220 comprises a metallic material that has low magnetic properties. The length of the longitudinal support 220 may be in the range of some. A correct positioning may therefore require a guide for the longitudinal support 220.

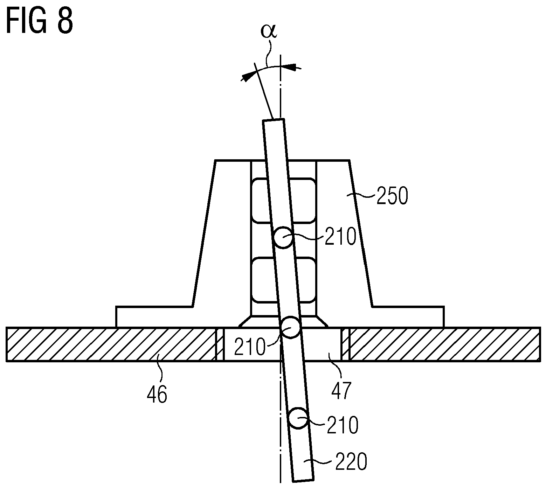

**Figure 8** shows a guide 250 temporarily attached to the break disc 46 for introducing the longitudinal support 220 and the plurality of sensors 210 to be attached to the rotor 30 through an inspection hole 47 of the break disc 46. The longitudinal support 220 is inserted through the guide 250 and the inspection hole 47 of the break disc 46 and mounted on the rotor 30 with an angle of inclination α, which may be comprised between 0 and 10 degrees with respect to the rotational axis Y. the angle of inclination α depends on the geometrical constraints of the assembly including the stator 20 and the rotor 30.

According to other embodiments (not shown), the break disc 46 is not mounted when the longitudinal support 220 is to be coupled to the rotor 30, for example during the first step 101 in the second embodiment (figure 4) of the method 100. In such case another component of the electric generator 11 may be used for mounting the guide 250.

## Claims

1. A method for performing a plurality of measurements in the air gap (15) between a stator (20) and a rotor (30) of a generator (11) for a wind turbine (1), the rotor (30) being rotatable with respect to the stator (20) about a rotational axis (Y), the method including the steps of:
mounting a plurality of distance measuring sensors (210) on at least one surface of the stator (20) and/or the rotor (30), said surface facing the air gap (15), each distance measuring sensor (210) being distanced from the other distance measuring sensor(s) (210) along the rotational axis (Y),
rotating the rotor (30) about the rotational axis (Y),
while rotating the rotor (30), measuring a plurality of distances between each of said distance measuring sensors (210) and respective facing points across the air gap (15),
deriving from said plurality of distances one or more value(s) of one or more parameter(s) associated with the air gap (15) and/or the stator (20) and/or rotor (30).

2. The method according to claim 1, wherein said steps of mounting, rotating and measuring are first performed with the plurality of distance measuring sensors (210) mounted on the stator (20) or rotor (30) and then said steps of mounting, rotating and measuring are again performed with the plurality of distance measuring sensors (210) mounted on the rotor (30) or stator (20).

3. The method according to claim 1, wherein in said step of mounting a first plurality of distance measuring sensors (210) are mounted on a first surface of the stator (20) and a second plurality of distance measuring sensors (210) are mounted on a second surface of the rotor (30), said first and second surfaces facing the air gap (15).

4. The method according to any of the previous claims, wherein at least a portion of plurality of distance measuring sensors (210) are fixed to a longitudinal support (220), said longitudinal support (220) being fixed on a surface of the stator (20) and/or the rotor (30), said surface facing the air gap (15), during said step of mounting.

5. The method according to claim 4, wherein the longitudinal support (220) is mounted with an angle of inclination (α) comprised between 0 and 10 degrees with respect to the rotational axis (Y).

6. The method according to any of the previous claims, wherein said one or more parameter(s) associated with the air gap (15) is any of:
a thickness of the air gap, and/or
a rotor roundness, and/or
a stator roundness, and/or
a rotor concentricity, and/or
a stator concentricity, and/or
distance of the rotor center from a reference position, and/or
distance of the stator center from a reference position.

7. A measurement device (200) for performing a plurality of measurements in the air gap (15) between a stator (20) and a rotor (30) of a generator (11) for a wind turbine (1), the measurement device (200) including:
a plurality of distance measuring sensors (210) mounted on a longitudinal support (220),
a controller (230) connected to the plurality of distance measuring sensors (210) and configured for performing the steps of the method according to any of the previous claims.

8. The measurement device (200) according to claim 7, wherein the plurality of distance measuring sensors (210) are capacitive sensors.
